# EUROPEAN PATENT SPECIFICATION

(11) **EP 1 886 577 B1**
(45) Date of publication and mention of the grant of the patent: **26.11.2014**
(21) Application number: 06746786.0
(22) Date of filing: 24.05.2006
(51) Int. Cl.: A23F 5/02

(54) **METHOD OF TREATING COFFEE FRUITS BY USING HOT WATER**
VERFAHREN ZUR BEHANDLUNG VON KAFFEEFRÜCHTEN UNTER VERWENDUNG VON HEISSEM WASSER
PROCEDE DE TRAITEMENT DES FRUITS DE CAFEIER EN UTILISANT DE L' EAU CHAUDE

(30) Priority: 25.05.2005 JP 2005153120
(43) Date of publication of application: 13.02.2008
(73) Proprietor: Suntory Beverage & Food Limited, Chuo-ku Tokyo 1040031 (JP)
(72) Inventor: YOMO, Hideko, Osaka 5600082 (JP); NAKAJIMA, Toshiharu, Tokyo 1830006 (JP)
(74) Representative: Vossius & Partner
(86) International application number: PCT/JP2006/310353
(87) International publication number: WO 2006/126588

(56) References cited:
- WO-A1-2005/029969
- JP-A- 01 112 950
- JP-A- 06 343 390
- JP-A- 09 502 099
- US-A- 2 526 872
- US-A- 2 607 690
- HIKAWA Y. ET AL.: 'Kakushu Wine Jozoyo Kobo no Wine Jozo Tokusei' REPORT OF THE YAMANASHI INDUSTRIAL TECHNOLOGY CENTER no. 18, 2004, pages 141 - 144, XP003006992
- BETANCOURT L.E. ET AL.: 'Bedingungen des mikrobiellen Verderbs von gruenem Kaffee. 1. Mitteilung: Sorptionsverhalten und Schinmelbildung' DUTSCH LEBENSM RUNDSCH vol. 79, no. 11, 1983, pages 366 - 369, XP002984299
- AVALLONE S. ET AL.: 'Fat of Mucilage Cell Wall Polysaccharides during Coffee Fermentation' J. AGRIC .FOOD CHEM. vol. 49, no. 11, 2001, pages 5556 - 5559, XP002984300
- NAITO M. ET AL.: 'Hakko shita Seisen Coffee-mame, Soybean Oyobi Beito Extract no Ko-Atheroma Keisei Koka' FOOD SCI. TECHNOL. RES. vol. 9, no. 2, 2003, pages 170 - 175, XP003006993

## Description

### TECHNICAL FIELD

The present invention relates to a method of treating coffee cherry, comprising a refining step for separating and refining green coffee beans from coffee cherry, as defined in the claims.

### BACKGROUND ART

Coffee cherry (the cherry of a plant of the Rubiaceae called "coffee tree") is generally grown in tropical regions near the equator. Coffee cherry trees bloom, bear cherry, and can be harvested two to three years after seeding.

Current well-known methods of treating coffee cherry comprise a refining step ("Natural" or "Washed") for removing the outer skin and pulp portions from the coffee cherry and separating out green coffee beans (see, e.g., Non-Patent Document 1).

Roasting the resulting green coffee beans yields roasted coffee beans (roasting step). The components that are the basis of the taste and aroma characteristic of coffee (referred to below as "coffee flavor and aroma components") are generated in this roasting step. The roasted coffee beans are then ground, and the result of extracting coffee flavor and aroma components using boiling water or the like is a coffee drink.

US-A-2526872 relates to specific processes of preparing green coffee from coffee cherries.

[Non-Patent Document 1] Michael Sivetz, M.S. and H. Elliott Foote, PhD "Coffee Processing Technology, Vol. 1" 1963, p. 48-49.

### DISCLOSURE OF THE INVENTION

### Problems That the Invention Is Intended to Solve

However, the coffee cherry that is harvested is ripe coffee cherry, and therefore spoilage progresses in a relatively short period of time due to the growth of contaminating bacteria and the like. Tropical climates also contribute to this problem. The refining step must therefore be implemented as quickly as possible after harvesting, but implementation in a short period of time is not possible when the yield is extremely high or when manpower is inadequate. Situations in which the quality of the coffee decreases and coffee cherry that was harvested must be discarded have therefore arisen.

The present invention was devised in light of the aforementioned problems and provides a method of treating coffee cherry, whereby the quality of coffee cherry stored after harvesting can be improved.

### Means for Solving the Problems

A first characteristic configuration of the present invention is a method of treating coffee cherry, comprising:
a refining step for separating and refining green coffee beans from coffee cherry, wherein
a hot-water treating step for treating the coffee cherry using hot water having a temperature of 50°C to 100°C is employed prior to the refining step; and
a fermenting step for bringing a microorganism, which is capable of metabolizing components contained in the coffee cherry, into contact with the coffee cherry after the hot-water treating step.

According to the first characteristic configuration of the present invention, the coffee cherry is treated using hot water, whereby bacteria attached to and living on the coffee cherry can be killed, and the initial number of contaminating bacteria can be reduced. As a result, the growth of contaminating bacteria can be slowed, and coffee cherry can be better preserved. A larger amount of green coffee beans can therefore be obtained and production efficiency will increase (production costs will decrease) without any particular increases in the manpower or equipment required for the refining step. Less expensive green coffee beans can therefore be provided.

Two types of formats, i.e., "Natural" and "Washed", are well-known for the refining step for obtaining green coffee beans from coffee cherry, but the present invention can be applied to both the "natural" and "Washed" refining methods. In other words, once the harvested coffee cherry has been treated using hot water, the hot-water treated coffee cherry may be subjected to either a "Natural" and "Washed" step.

The temperature of the hot water is 50°C to 100°C, and therefore the hot-water treatment can be implemented using a simple operation involving, e.g., placing the harvested coffee cherry in boiling water, without any particular need for an autoclave sterilizing apparatus or the like. Degeneration of the coffee cherry is also slight in comparison with autoclave sterilization (high-pressure stream sterilization).

The method of the present invention comprises a fermenting step for bringing a microorganism, which is capable of metabolizing components contained in the coffee cherry, into contact with the coffee cherry after the hot-water treating step.

According to this characteristic configuration of the present invention, coffee cherry is treated using hot water, whereby the number of bacteria attached to and living on the coffee cherry can be reduced. Bacterial contamination can therefore be prevented, and fermentation can be implemented. The vegetable fibers of the coffee cherry swell and soften due to the hot-water treatment, whereby the microorganism can readily infiltrate into the coffee cherry. The sugars and the like contained within the coffee pulp also readily dissolve, and fermentation by the microorganism is more readily promoted.

Yeasts and the like are representative of microorganisms that degrade (ferment) organic compounds (nutritive substance) and produce alcohols, organic acids, esters, and the like (referred to below as "fermented components"). When fermentation is performed using the aforedescribed microorganism (e.g., yeast) in the presence of coffee cherry that has been subjected to the hot-water treating step, i.e., in the presence of nutritive substance originating from the coffee cherry (the principal nutritive substance in this instance is, e.g., the coffee pulp (the portions that include sugars and other nutrients)), the fermented components that are produced are absorbed along with water into the green coffee beans (seeds) that are present in the innermost part of the coffee cherry.

Therefore, when the green coffee beans resulting from the fermenting step are roasted, roasted coffee beans can be obtained, these beans having new flavor and aroma components that originate from the fermented components produced by fermentation in addition to the conventional coffee flavor and aroma components generated in the roasting step. New and favorable flavor and aroma is imparted to the coffee drink resulting from performing extraction on these roasted coffee beans.

In a second characteristic configuration of the present invention, the microorganism is of at least one type selected from among the group composed of yeast, lactic acid bacteria, and Deuteromycota.

According to the second characteristic configuration of the present invention, these microorganisms are readily obtained and are easily handled due to the ability to apply general methods of culturing, storage, and the like.

In a third characteristic configuration of the present invention, the yeast is a wine-fermenting yeast.

According to the third characteristic configuration of the present invention, a wine-fermenting yeast is used as the microorganism. A characteristic brewed aroma can therefore be imparted to the green coffee beans. By using these green coffee beans as a raw material, a coffee drink can be obtained having a fruity brewed aroma and a full-bodied taste in addition to the conventional coffee flavor and aroma generated in the roasting step.

In a fourth characteristic configuration of the present invention, the Deuteromycota belongs to the genus Geotrichum.

In the method of treating coffee cherry according to the fourth characteristic configuration of the present invention, the fermentation treatment is performed using, e.g., Geotrichum candidum, Geotrichum rectangulatum, or Geotrichum klebahnii as the Deuteromycota belonging to the genus Geotrichum, and new flavor and aroma components (fermented components) can be imparted to the green coffee beans. By using as a raw material the green coffee beans obtained using the aforementioned microorganisms in particular, a coffee drink can be obtained providing a full-bodied taste and having a fruity and rich estery aroma (in which alcohol smells are limited) balanced with the conventional coffee flavors and aromas generated in the roasting step.

In a fifth characteristic configuration of the present invention, the Deuteromycota belonging to the genus Geotrichum is Geotrichum sp. SAM2421 (international deposit number FERM BP-10300), a variant thereof as defined further below, or a transformant thereof as defined further below.

In the method of treating coffee cherry according to the fifth characteristic configuration of the present invention, Geotrichum sp. SAM2421 (international deposit number FERM BP-10300) ("SAM2421") is used. SAM2421 is a novel microorganism that was separated from coffee cherry by the present inventors. This microorganism was accepted into the International Patent Organism Depository of the National Institute of Advanced Industrial Science and Technology (#6 Chuo 1-1-1 Tsukuba-shi-higashi Ibaraki-ken Japan) on March 22, 2005. By using SAM2421, new flavor and aroma components (fermented components) are imparted to the green coffee beans. A coffee drink can thereby be obtained having a more fruity and rich estery aroma and providing a full-bodied taste. SAM2421, variants thereof, or transformants thereof may be used as appropriate in the present invention. Variants are strains having spontaneous mutations and strains in which mutation is artificially induced (that are treated with radiation or mutagens), while transformants are SAM2421 or variants thereof into which foreign genes have been introduced. Strains having better fermentative ability (or having other characteristics such as easy handling) can be separated from these variants and transformants and put to use.

Also disclosed herein are green coffee beans obtained using the method of treating coffee cherry according to the first characteristic configuration.

The green coffee beans thus obtained are inexpensive and contain fermented components that impart new and favorable flavor and aroma to a coffee drink.

The present specification further discloses roasted coffee beans resulting from roasting the green coffee beans described above.

. The roasted coffee beans disclosed herein are inexpensive and contain new flavor and aroma components originating from the fermented components produced by fermentation of the microorganism in addition to the conventional coffee flavor and aroma components generated in the roasting step.

Also disclosed herein is a coffee drink obtained using the roasted coffee beans described above as a raw material.

The coffee drink disclosed herein is inexpensive and has new and favorable flavor and aroma originating from the fermented components produced by fermentation of the microorganism in addition to the conventional coffee flavor and aroma.

### BEST MODE FOR CARRYING OUT THE INVENTION

Embodiments of the present invention will be described below.

### [Embodiments]

### (Coffee Cherry)

"Coffee cherry" in the present invention refers to the cherry of the coffee tree. The general structure of a coffee cherry is composed of green coffee beans (seeds), pulp (the portions containing sugar and other nutrients), and an outer skin. To be more specific, the green coffee beans are present in the innermost part and are surrounded in order by the silver skin, the parchment, the pulp, and the outer skin. Arabica, robusta, liberica, and the like may be used as appropriate as the variety of coffee. The area of production may be Brazil, Ethiopia, Vietnam, Guatemala, or another location as appropriate, but the area of production is not particularly limited.

### (Hot-Water Treating Step)

Examples of water that can be used for the hot-water treatment include soft water, hard water, oxygenated water, carbonated water, water containing vanadium, deep seawater, ionized water, alkaline water, and acidic water, but the water is not particularly limited.

The conditions for the hot-water treatment are not particularly limited as long as contaminating bacteria and the Like attached to and growing on the coffee cherry can be killed or removed at least on the surface of the coffee cherry. The temperature of the hot water is 50°C to 100°C.

The present step can be implemented by, e.g., putting the harvested coffee cherry and the hot water into a container such as a large pot and washing the coffee cherry (the washing time and the temperature of the hot water are set as appropriate in ranges that allow the sterilization and removal of contaminating bacteria and the like attached to and growing on the coffee cherry). An alternative method may .involve laying out the coffee cherry and sprinkling hot water from above. After the coffee cherry is subjected to the hot-water treatment, the pulp and like is removed in the refining step, and the green coffee beans are separated.

### (Green Coffee Beans)

Two types of formats, i.e., "Natural" and "Washed", are well-known for the refining step for obtaining the green coffee beans from the coffee cherry.

"Natural" is a method for isolating green coffee beans in which the dried portions are stripped from the coffee cherry after harvesting, and the outer skin, pulp, parchment, silver skin, and the like are removed.

"Washed" is a method for isolating green coffee beans in which the coffee cherry is soaked in a vat of water after harvesting, impurities are removed, and the outer skin and pulp are removed using a pulp-removing machine, after which the coffee cherry is immersed in water, and glutinous materials are dissolved and removed. The dried portions are then stripped after washing with water, and the parchment and silver skin are removed.

The operations of "Natural" step are simple, but this format is primarily applied in regions having a dry climate. On the other hand, "Washed" steps are primarily applied in regions having frequent rainfall. One or two coffee beans are extracted from one coffee cherry.

### (Nutritive Substance)

The microorganism in the fermenting step of the present invention uses the pulp of the coffee cherry subjected to the hot-water treatment as the nutritive substance, but other nutritive substances may also be added and fermented as necessary.

Fruit pulp (e.g., coffee pulp, grape pulp, cherry pulp, or peach pulp), fruit juice (e.g., grape, peach, or apple), sugars (e.g., monosaccharides, disaccharides, and polysaccharides from sugarcane, sweet potatoes, or other plants), grains (e.g., wort resulting from the glycosylation of malt), and culture media may be given as examples of additional nutritive substances, but the nutritive substance is not particularly limited as long as the substance can be metabolized by the microorganism. These nutritive substances can be used alone or in any desired combination.

The aforementioned additional nutritive substances are used after performing sterilization treatments (e.g., a hot-water treatment) as necessary.

### (Method for Exposing Coffee Pulp)

A method for exposing the coffee pulp on at least a part of the surface of the coffee cherry may also be used in order to increase the rate of fermentation in the fermenting step of the present invention.

The method for exposing the coffee pulp may involve damaging the harvested coffee cherry using a sharp blade or the like before or after the hot-water treatment. Alternatively, the coffee cherry may be subjected to pressure using a threshing apparatus or the like so that openings are cut in the outer skin, but the damage must not extend to the green coffee beans within. A peeling machine or the like may also be used so that only the outer skin of the coffee cherry is peeled and the pulp is exposed. The aforedescribed operations for exposing the pulp are not particularly necessary when the coffee cherry is accidentally damaged and at least part of the pulp exposed during harvesting. The aforedescribed operations for exposing the pulp are also not particularly necessary when the coffee pulp obtained when separating out the green coffee beans in the refining step is used, and fermentation is performed with the green coffee beans added separately.

### (Microorganism)

The microorganism used in the present invention is not particularly limited as long as the microorganism is capable of metabolizing (fermenting) nutritive substances such as described above.

Yeast, lactic-acid bacteria, and Deuteromycota are specific examples of the microorganism. These microorganisms can be ideally used due to being readily acquired and handled.

As for yeast, brewing yeasts such as wine-fermenting yeasts and beer-fermenting yeasts that have a history of use in food products can be ideally used from the perspective of food safety. The wine-fermenting yeast used may be, e.g., the Lalvin L2323 strain (referred to below as L2323, obtained from the Sceti Company) or the CK S102 strain (referred to below as S102, obtained from Bio Springer), which are commercial dried yeasts. L2323 is usually used for brewing red wine, and S102 is usually used for brewing rosé wines, A characteristic brewed aroma can be added when such yeasts are used.

Well-known bacteria used in the manufacture of fermented milk, lactic-acid bacteria beverages, cheese-fermented milk, and other products may be applied as the lactic-acid bacteria. Lactic-acid bacteria of the genus Lactobacillus are an ideal example.

Examples of Deuteromycota include members of the genus Geotrichum; e.g., Geotrichum candidum, Geotrichum rectangulatum, Geotrichum klebahnii, and, more preferably, Geotrichum sp. SAM2421 (international deposit number FERM BP-10300), or variants and transformants thereof.

Examples of sources from which microorganisms belonging to the genus Geotrichum can be isolated include soil, plants, air, fiber, wood, house dust, animal feed, rivers, silage, food, fruit, grain, fertilizer, factory wastewater, compost, excrement, and the alimentary canal, but fruit (coffee cherry) is preferable.

Examples of the method of isolation include stirring coffee cherry in sterilized water, culturing the supernatant applied on an agar medium containing appropriate antibiotics, and isolating the colonies that are produced, but the microorganisms may also be purchased directly from an appropriate fungus-storing facility or the like.

Variants in the present invention are strains having spontaneous mutations and strains obtained by artificially inducing mutations (using treatments with radiation, mutagens, or the like) in which the DNA-base sequence has changed relative to the wild-type Geotrichum sp. SAM2421 (international deposit number FERM BP-10300)).

### (1) Spontaneous mutation

Mutations that occur when the microorganism is growing naturally in a normal environment are called "spontaneous mutations." The main causes of spontaneous mutations are thought to be errors during DNA replication and endogenous mutagens (nucleotide analogs) (Maki, "Spontaneous Mutations and Repair Mechanisms," Saibo Kagaku (Cell Technology), Vol. 13 No. 8, pp. 663-672, 1994).

### (2) Artificial mutation

### 2-1. Treatments using radiation and mutagens

DNA is damaged by ultraviolet light, X-rays, and other radiation treatments, or by treatment with artificial mutagens such as alkylating agents. This damage is fixed as mutations during the process of DNA repair.

### 2-2. Using PCR (polymerase chain reaction) methods

Due to the fact that PCR amplifies the DNA within a test tube, part of the mechanism for inhibiting mutation within the cell will be lacking, and a high frequency of mutation can be induced. By combining PCR and the gene-shuffling method (Stemmer, "Rapid evolution of a protein in vitro by DNA shuffling," Nature Vol. 370, pp. 389-391, Aug. 1994), the accumulation of damaging mutations can be avoided, and a plurality of advantageous mutations can accumulate in the genes.

### 2-3. Use of mutators

The rate of occurrence of spontaneous mutations is held to an extremely low level in almost all organisms due to a mechanism for inhibiting mutation. The mechanism for inhibiting mutation has a plurality of stages involving the participation of 10 or more types of genes. Mutations occur at a high frequency in individuals in which one or a plurality of these genes is destroyed. These individuals are therefore called "mutators." These genes are called "mutator genes" (Maki, "Spontaneous Mutations and Repair Mechanisms," Saibo Kagaku (Cell Technology), Vol. 13 No. 8, pp. 663-672, 1994; Horst et al., "Escherichia coli mutator genes," Trends in Microbiology Vol. 7 No. 1, pp. 29-36, Jan. 1999).

"Transformants" in the present invention refers to strains in which genes of another type of organism (foreign genes) are artificially introduced into novel microorganisms (Geotrichum sp. SAM2421 (international deposit number FERM BP-10300)) or variants thereof. The manufacturing process involves, e.g., integrating foreign genes into an appropriate expression vector and introducing the expression vector using an electroporation method, a calcium phosphate method, a liposome method, a DEAE dextran method, or another well-known method.

When using a dried microorganism, rehydration can be performed according to the method appropriate for each case. For example, when using dried yeast, the yeast can be used after being soaked for 20 to 30 minutes in water heated to 37 to 41°C.

The amount of the microorganism to be used in the present invention is not particularly limited as long as the effect of added flavor and aroma is obtained, but the amount should be set while taking into consideration the culturing time and cost. Appropriate amounts per [unit] weight of green coffee beans are, e.g., 1.0 × 10⁸ cells/g to 1.0 × 10¹⁰ cells/g for yeast and lactic-acid bacteria, and 1.0 mg/g to 10 mg/g for Deuteromycota.

### (Fermenting Step)

### 1. Method for bringing the microorganism and the nutritive substance into contact

Examples of methods for bringing the microorganism and the nutritive substance into contact in the fermenting step of the present invention are given below.

### (a) Direct method

The direct method involves bringing the microorganism into direct contact with the nutritive substance in the presence of coffee pulp. Direct contact and fermentation are implemented when, e.g., a suspension containing the microorganism is sprayed or sprinkled on coffee cherry in which the surface has been damaged as necessary using a knife or the like and a part of the coffee pulp has been exposed. Alternatively, a suspension is prepared in which the fermenting microorganism is suspended at a small concentration in a relatively large amount of water (e.g., an amount corresponding to approximately the same weight as the coffee cherry). The coffee cherry to be fermented is then immersed in and removed from the suspension and thereby brought into contact [with the fermenting microorganism], after which fermentation may be performed.

Particularly when fermentation is performed using coffee cherry in which part of the pulp is exposed, the microorganism readily infiltrates the coffee cherry from the exposed portions. The metabolized sugars and the like are localized in the pulp at high concentrations, and therefore fermentation proceeds efficiently, and the green coffee beans are present in close proximity, allowing the alcohols, esters, and other fermented components produced by fermentation to be rapidly transferred into the green coffee beans. Fermentation may also be performed with an appropriate amount of water when using dried coffee cherry (or dried coffee pulp).

### (b) Indirect method

The indirect method involves preparing a fermentation vat provided with a fermentation liquid. The coffee cherry, the microorganism, and, as necessary, the aforementioned additional nutritive substances are added to the fermentation solution, and the microorganism is brought into contact with the nutritive substance that dissolves into the fermentation liquid. Particularly when using coffee cherry in which the surface has been damaged as necessary using a knife or the like and a part of the coffee pulp has been exposed, the sugars and the like in the pulp will readily dissolve into the fermentation liquid, and fermentation by the fermenting microorganism will be facilitated due to the pulp being exposed.

### 2. Fermentation conditions

The fermentation conditions of the microorganism are not particularly limited as long as fermentation occurs. Conditions appropriate for fermentation (e.g., the type and amount (the initial number of cells) of microorganism used, the type and amount (concentration) of the nutritive substance, the temperature, the humidity, the pH, the concentration of oxygen or carbon dioxide, and the fermentation time) can be set appropriately as necessary. Besides the aforementioned nutritive substance, examples of other components that may be added as necessary include pH-regulating agents, other additives, and supplemental commercial nutrient media for supplying sources of, e.g., nitrogen and carbon.

In order to prevent contamination with bacteria in the fermenting step of the present invention in particular, fermentation may also be performed while controlling conditions such as temperature, pH, carbon dioxide concentration, and like individually or in any appropriate combination so as to limit the growth of contaminating bacteria. For example, fermentation may be performed in a low-temperature environment of 15 to 30°C, fermentation may be performed under stringent acidic conditions by adding a pH-regulating agent (e.g., citric acid, malic acid, or lactic acid) or the like as necessary, or the concentration of carbon dioxide (or the concentration of oxygen) may be raised and fermentation implemented under more anaerobic (or more aerobic) conditions.

The fermenting step of the present invention may also be performed using equipment or apparatuses (e.g., constant-temperature vats, tanks, and containers) that allow automatic and/or manual control of the aforementioned fermentation conditions (e.g., the type and amount (the initial number of cells) of microorganism used, the type and amount (concentration) of the nutritive substance, the temperature, the humidity, the pH, the concentration of oxygen or carbon dioxide, and the fermentation time).

The time required for the fermenting step is not limited but should be appropriately selected according to the type and strength of the added flavor and aroma or according to the microorganism and the nutritive substance. The depletion of nutritive substance may also be used as an indication for ending the fermenting step.

The fermenting step may be ended by implementing heat sterilization, washing, sun drying, separation of the nutritive substance and the green coffee beans, roasting, or other treatments alone or in any desired combination. When using, e.g., a drier, drying is performed at 50 to 60°C for approximately 1 to 3 days, whereby fermentation can be ended.

Microorganisms (two or more types of microorganism may be selected and used simultaneously) and fermentation conditions are all appropriately selected and combined as desired in the present invention, whereby a variety of flavors and aromas can be added to the green coffee beans.

### 3. Example fermenting step

An example of fermentation using coffee cherry will now be described.

The present invention may comprise performing the fermenting step during the refining step of the green coffee beans.

"Natural" step involves, e.g., harvesting the coffee cherry, performing the hot-water treatment, then bringing the coffee cherry into contact with the microorganism using the aforedescribed direct method, performing fermentation, and, finally, drying.

"Washed" step involves, e.g., harvesting the coffee cherry, performing the hot-water treatment, then immersing the coffee cherry in a vat of water and removing impurities, using the aforedescribed indirect method to add the microorganism and the coffee cherry to the vat of water (fermentation vat), and performing fermentation.

After the fermenting step has ended, the microorganism is washed away and separated from the coffee cherry using water or the like, after which the pulp is removed according to a normal refining step, the cherry is stripped, and the green coffee beans are separated out. The pulp may also be removed with the fermenting microorganism still attached.

The green coffee beans that have been thus separated may be roasted using normal methods. Roasted coffee beans can be obtained having a variety of different degrees of roasting (from light to Italian roasting).

The resulting roasted coffee beans are ground and soaked with water, which is then extracted through filtration by a filtering material. The resulting liquid can be provided as regular coffee for consumption or can be used as an industrial raw material for instant coffee, coffee extracts, canned coffee, or the like.

The present invention will be described in more detail below using examples, but the present invention is not limited to these examples.

### Example 1

### (Effects of Hot-Water Treatment on Solubility of Coffee Cherry Components)

The effects of the hot-water treatment on component solubility were investigated using coffee cherry.

1000 g of coffee cherry (grown in Okinawa Prefecture) was put into a conical flask having a capacity of 5000 mL. 3000 mL of water heated to 80°C was added, and the mixture was left to stand for approximately 3 minutes. Discarding water was then performed using a strainer, and hot-water treated coffee cherry was obtained.

500 g of the heat-treated coffee cherry was put into a conical flask having a capacity of 2000 mL, 400 mL of water was added, and the mixture was left to stand for 24 hours at 23°C (Sample 1). Coffee cherry that was not subjected to the hot-water treatment was used as a control and tested in the same manner (Comparative Example 1).

The concentrations of citric acid, malic acid, amino nitrogen, and monosaccharides (glucose), which are components originating from the pulp, were measured for both immersion liquids.

Citric acid and malic acid were measured using HPLC. An HPLC--type apparatus made by Shimadzu Corporation was used. Measurement involved the use of a Shim-pack SCR-102H (column), a Tris buffer containing p-toluenesulfonic acid (951 mg/L) (mobile phase), and an electrical-conductivity detector CDD-6A (detector). Amino nitrogen was measured using the TNBS method. As for monosaccharides, glucose was evaluated using a glucose measurement kit, i.e., a "Liquitech Glucose HK Test" (by Roche Diagnostics). The results are shown in Table 1. An effect in which the amount of nutritive substance that dissolves into the immersion liquid increases due to the hot-water treatment can thus be seen.

**[Table 1]**

| | Sample 1 | Comparative Example 1 |
|---|---|---|
| Citric acid (ppm) | 187 | 38 |
| Malic acid (ppm) | 991 | 97 |
| Amino nitrogen (mg/100 mL) | 19.0 | 14.5 |
| Glucose (%) (w/v) | 0.80 | 0.46 |

### Example 2

The effects of the hot-water treatment on component solubility were investigated using coffee cherry. 1000 g of coffee cherry (grown in Okinawa Prefecture) was put into a conical flask having a capacity of 5000 mL. 3000 mL of water heated to 80°C was added, and the mixture was left to stand for approximately 3 minutes. Discarding water was then performed using a strainer, and hot-water treated coffee cherry was obtained.

500 g of the heat-treated coffee cherry was put into a conical flask having a capacity of 2000 mL, and 400 mL of water (the fermentation liquid) was added. Geotrichum sp. SAM2421 (international deposit number FERM BP-10300) ("SAM2421") was added as a fermenting microorganism (approximately 1 × 10⁶ cells of SAM2421 were added per mL of fermentation liquid), and the mixture was left to stand for 72 hours at 23°C (Sample 2). Coffee cherry that was not subjected to the hot-water treatment was used as a control and tested in the same manner (Comparative Example 2).

Observations of the fermentation liquid showed that growth of organisms other than SAM2421 was not apparent in Sample 2, and the fermentation liquid presented a favorable aroma.

On the other hand, the growth of microorganisms thought to be contaminating bacteria was seen in the final phase of fermentation of Comparative Example 2. A slightly acidic smell was recognized in addition to the favorable brewed aroma.

The supernatant of the resulting fermentation liquid was then sampled over time (at 24 hours, 48 hours, and 72 hours) and subjected to component analysis.

Since acetic-acid producing bacteria are representative of the contaminating bacteria that have adverse effects on the quality of coffee beans, the concentration of acetic acid in the supernatant was analyzed using liquid chromatography, and a determination was made as to whether or not acetic-acid producing bacteria were growing (i.e., a judgment was made as to whether the amount of acetic acid production and the concentration of acetic acid increased during the growth of acetic-acid producing bacteria).

The apparatus used for liquid chromatography was an HPLC-type apparatus made by Shimadzu Corporation. A Shim-pack SCR-102H was used as the column, and detection was performed using an electrical-conductivity detector CDD-6A. The temperature of the column oven was 40°C, and reaction and elution were performed using a Tris buffer containing p-toluenesulfonic acid. Quantification was carried out using an absolute calibration curve. The results of the liquid chromatography are shown in Table 2. The concentration of acetic acid was lower (i.e., the amount of acetic acid production was lower) in Sample 2, which was subjected to the hot-water treatment, than in Comparative Example 2. When these results were taken together with the results of Example 1, it was judged that, by subjecting coffee cherry to the hot-water treatment, the technique of the present invention is effective for limiting the growth of contaminating bacteria and for stimulating the growth of intentionally added microorganisms (e.g., SAM2421), regardless of the dissolution amount of nutritive substance that is appropriate for the growth of the microorganism.

**[Table 2]**

| Time | Concentration of acetic acid (ppm) | |
|---|---|---|
| | Sample 2 | Comparative Example 2 |
| 24 hours | 214 | 577 |
| 48 hours | 558 | 1514 |
| 72 hours | 920 | 4145 |

The roasted coffee beans were evaluated next. The coffee cherry was retrieved from the fermentation liquid after fermentation, discarded, and then dried for 48 hours at 55°C using a drier. The pulp and skin were then removed using a pulping machine, and approximately 250 g of green coffee beans was obtained. 100 g of the resulting green coffee beans was roasted by pressing the deep-roast button on a completely automatic home coffee-bean roaster (a CRPA-100 made by Tortoise Co., Ltd.). The roasting time was approximately 25 minutes.

A sensory evaluation was then performed on the roasted coffee beans by a panel of five specialists in coffee evaluation. 30 g of the roasted coffee beans of both Sample 2 and Comparative Example 2 were put into specialized sampling glasses in their original, unground form, and the glasses were covered. The covers were removed at the time of the sensory evaluation, and estery aroma and acetic-acid smell were evaluated. Evaluations were made in increments of 0.5 using five levels: weak (1), somewhat weak (2), moderate (3), somewhat strong (4), and strong (5). The results, which are expressed as the average values of the five evaluations, are shown in Table 3. The roasted coffee beans of Sample 2 had a more favorable aroma than that of Comparative Example 2.

**[Table 3]**

| Evaluation | | Sample 2 | Comparative Example 2 |
|---|---|---|---|
| Aroma | Estery aroma | 3.8 | 3.0 |
| | Acetic-acid smell | 3.0 | 4.5 |

Coffee extracts were prepared using the roasted coffee beans of Sample 2 and Comparative Example 2. The roasted coffee beans were finely ground. 100 g of hot water was added to and stirred with 12 g of ground beans. The coffee that floated to the top was removed, and a sensory evaluation was performed on the supernatant fluid in accordance with a standard cup-test method. The sensory evaluation was performed by a panel of five coffee specialists. There were four categories of evaluation: aroma (estery aroma and brewed aroma) and taste (body and acidity). Evaluations were made in increments of 0.5 using five levels: weak (1), somewhat weak (2), moderate (3), somewhat strong (4), and strong (5). The results, which are expressed as the average values of the five evaluations, are shown in Table 4. The coffee extract of Sample 2 had a more favorable aroma and taste than that of Comparative Example 2.

**[Table 4]**

| Evaluation | | Sample 2 | Comparative Example 2 |
|---|---|---|---|
| Aroma | Estery aroma | 3.9 | 3.5 |
| | Brewed aroma | 3.3 | 3.1 |
| Taste | Body | 3.7 | 3.2 |
| | Acidity | 2.2 | 4.0 |

### Example 3

The effects of the hot-water treatment were investigated using coffee cherry grown in Okinawa Prefecture. Commercial dried wine yeast was used as the microorganism and was fermented using the direct method. 1 g of dried wine yeast (Lalvin L2323, purchased from the Sceti Company) was suspended, rehydrated, and activated in 20 mL of warm water. The suspension was then sprinkled on 1 kg of coffee cherry in a bottle having a capacity of 2 L. The mixture was left to stand and ferment for three days at room temperature (23°C).

Comparative Example 3 was a mixture in which the pre-inoculation coffee cherry was treated using normal tap water (23°C) instead of the hot-water treatment. As for the examples of the present invention, an experimental batch was prepared in three ways, differing in regard to the temperature of the hot water used in the treatment. The temperatures were 50°C (Sample 4), 65°C (Sample 5), and 100°C (Sample 6).

The aromas of the fermentation bottles were examined after three days. The aroma of the mixture washed using normal tap water was strong, but slightly acidic, and the amount of acetic acid production was thought to be high. The experimental batch had a strong fermentation aroma that was estery and fruity at 50°C (Sample 4), 65°C (Sample 5), and 100°C (Sample 6).

The roasted coffee beans were evaluated next. The coffee cherry was removed from the bottles after fermentation and dried for 48 hours at 55°C using a drier. A pulping machine was then used to remove the pulp and skin, and approximately 250 g of green coffee beans was obtained. 100 g of the resulting green coffee beans was roasted by pressing the deep-roast button on a completely automatic home coffee-bean roaster (a CRPA-100 made by Tortoise Co., Ltd.). The roasting time was approximately 25 minutes. A sensory evaluation was then performed on the roasted coffee beans by a panel of five specialists in coffee evaluation. 30 g of the roasted coffee beans of Comparative Example 3 and Samples 4 through 6 were put into specialized sampling glasses in their original, unground form, and the glasses were covered. The covers were removed at the time of the sensory evaluation, and an evaluation was made for two types of aroma, i.e., an estery aroma and an acetic-acid smell. Evaluations were made in increments of 0.5 using five levels: weak (1), somewhat weak (2), moderate (3), somewhat strong (4), and strong (5). The results, which are expressed as the average values of the five evaluations, are shown in Table 5. The roasted coffee beans of Samples 4 through 6 had a more favorable aroma than that of Comparative Example 3.

**[Table 5]**

| Evaluation | Comparative Example 3 (23 °C) | Sample 4 (50°C) | Sample 5 (65°C) | Sample 6 (100°C) |
|---|---|---|---|---|
| Estery aroma | 3.5 | 4 | 4 | 3.8 |
| Acetic-acid smell | 4.0 | 3.0 | 3.0 | 3.0 |

Coffee extracts were prepared using the roasted coffee beans of Comparative Example 3 and Samples 4 through 6. The roasted coffee beans were finely ground. 100 g of hot water was added to and stirred with 12 g of ground beans. The coffee that floated to the top was removed, and a sensory evaluation was performed on the supernatant fluid in accordance with a standard cup-test method. The sensory evaluation was performed by a panel of five coffee specialists. There were four categories of evaluation: aroma (estery aroma and brewed aroma) and taste (body and acidity). The evaluation was from extremely weak (1) to extremely strong (5) in increments of 0.1. The results, which are expressed as the average values of the five evaluations, are shown in Table 6. The coffee extract of Samples 4 through 6 had a more favorable aroma and taste than that of Comparative Example 3. The experimental batch treated at 100°C (Sample 6) had a slight "cooked" smell.

**[Table 6]**

| Evaluation | Comparative Example 3 (23 °C) | Sample 4 (50°C) | Sample 5 (65°C) | Sample 6 (100°C) |
|---|---|---|---|---|
| Estery aroma | 3.5 | 4.0 | 4.0 | 3.8 |
| Brewed aroma | 3.5 | 3.5 | 3.5 | 3.5 |
| Body | 3.0 | 3.8 | 3.8 | 3.5 |
| Acidity | 4.0 | 3.5 | 3.5 | 3.5 |

### INDUSTRIAL APPLICABILITY

The present invention is extremely useful as the beginning of operations for processing coffee cherry, e.g., for refining and roasting, as well as for operations for manufacturing coffee drinks in which a variety of products (green coffee beans, roasted coffee beans, regular coffee, instant coffee, canned coffee, coffee aroma, and the like) are manufactured from coffee cherry treated according to the present invention. The present invention also contributes to the further development of such industries.

## Claims

1. A method of treating coffee cherry, comprising:
a refining step for separating green coffee beans from coffee cherry, wherein
a hot-water treating step for treating the coffee cherry using water having a temperature of 50°C to 100°C is employed prior to the refining step; and
a fermenting step for bringing a microorganism, which is capable of metabolizing components contained in the coffee cherry, into contact with the coffee cherry after the hot-water treating step.

2. The method according to claim 1, wherein the microorganism is of at least one type selected from among the group composed of yeast, lactic acid bacteria, and Deuteromycota.

3. The method according to claim 2, wherein the yeast is a wine-fermenting yeast.

4. The method according to claim 2, wherein the Deuteromycota belongs to the genus Geotrichum.

5. The method according to claim 4, wherein the Deuteromycota belonging to the genus Geotrichum is Geotrichum sp. SAM2421 (international deposit number FERM BP-10300), a variant thereof which is a strain obtained by spontaneous mutation or by artificially inducing mutation in which the DNA-base sequence has changed relative to the wild-type strain, or a transformants thereof in which genes of another type of organism are artificially introduced.

## Patentansprüche

1. Ein Verfahren zur Behandlung von Kaffeekirschen, umfassend:
einen Raffinierungsschritt zur Trennung von grünen Kaffeebohnen von Kaffeekirschen, wobei
ein Heißwasser-Behandlungsschritt zur Behandlung der Kaffeekirschen unter Verwendung von Wasser mit einer Temperatur von 50°C bis 100°C vor dem Raffinierungsschritt verwendet wird; und
einen Fermentierungsschritt zum in Kontakt bringen eines Mikroorganismus, der in der Lage ist, in den Kaffeekirschen enthaltene Bestandteile zu verstoffwechseln, mit den Kaffeekirschen nach dem Heißwasser-Behandlungsschritt.

2. Das Verfahren nach Anspruch 1, wobei der Mikroorganismus von mindestens einer Art ist, die ausgewählt ist aus der Gruppe bestehend aus Hefe, Milchsäurebakterien und Deuteromycota.

3. Das Verfahren nach Anspruch 2, wobei die Hefe eine Weinfermentationshefe ist.

4. Das Verfahren nach Anspruch 2, wobei die Deuteromycota zur Gattung Geotrichum gehören.

5. Das Verfahren nach Anspruch 4, wobei die Deuteromycota, die zur Gattung Geotrichum gehören, Geotrichum sp. SAM2421 (internationale Hinterlegungsnummer FERM BP-10300), eine Variante davon, bei welcher es sich um einen Stamm handelt, der durch spontane Mutation oder durch künstlich herbeigeführte Mutation, bei der die DNA-Basensequenz in Bezug auf den Stamm vom Wildtyp verändert wurde, erhalten wurde, oder ein Transformant davon, in den Gene einer anderen Art von Organismus künstlich eingebracht werden, sind.

## Revendications

1. Méthode de traitement de la cerise de café, comprenant :
une étape de raffinage pour séparer les grains de café verts de la cerise de café, dans laquelle
une étape de traitement à l'eau chaude pour traiter la cerise de café en utilisant une eau à une température de 50 à 100 °C est utilisée avant l'étape de raffinage ; et
une étape de fermentation pour mettre un micro-organisme, qui est capable de métaboliser les composants contenus dans la cerise de café, en contact avec la cerise de café est utilisée après le traitement à l'eau chaude.

2. Méthode selon la revendication 1, dans laquelle le micro-organisme est au moins d'un type choisi dans le groupe constitué par la levure, les bactéries lactiques, et Deuteromycota.

3. Méthode selon la revendication 2, dans laquelle la levure est une levure de fermentation du vin.

4. Méthode selon la revendication 2, dans laquelle Deuteromycota appartient au genre Geotrichum.

5. Méthode selon la revendication 4, dans laquelle Deuteromycota appartenant au genre Geotrichum est Geotrichum sp. SAM2421 (numéro de dépôt international FERM BP-10300), un variant de celui-ci qui est une souche obtenue par mutation spontanée ou mutation induite artificiellement dans laquelle la séquence de bases ADN est modifiée par rapport à la souche de type sauvage, ou un transformant de celui--ci dans lequel des gènes d'un autre type d'organisme sont artificiellement introduits.
